# EUROPÄISCHE PATENTSCHRIFT

(11) **EP 1 350 551 B1**
(45) Veröffentlichungstag und Bekanntmachung des Hinweises auf die Patenterteilung: **24.05.2006**
(21) Anmeldenummer: 03100547.3
(22) Anmeldetag: 06.03.2003
(51) Int. Cl.: B01D 35/147, F01M 11/03, F16K 17/04, F16K 15/02

(54) **Ventilanordnung, insbesondere für den Schmierölkreislauf einer Brennkraftmaschine, beinhaltend ein Rücklaufsperrventil sowie ein Umgehungsventil**
Valve assembly, partycularly for the lubrication circuit of an internal combustion engine, comprising a check and a bypass valve
Dispositif à vannes, particulièrement pour le circuit de graissage d'un moteur à combustion interne, comprennant une vanne à contourner et une vanne unidirectionale

(30) Priorität: 28.03.2002 DE 10213939
(43) Veröffentlichungstag der Anmeldung: 08.10.2003
(73) Patentinhaber: Mann + Hummel GmbH, 71638 Ludwigsburg (DE)
(72) Erfinder: Jainek, Herbert, 74074, Heilbronn (DE)

(56) Entgegenhaltungen:
- DE-A- 19 960 203
- DE-B- 1 152 285
- GB-A- 2 279 725
- US-A- 4 051 031
- US-A- 4 322 290
- US-A- 5 250 176

## Beschreibung

Die Erfindung betrifft eine Ventilanordnung insbesondere für einen Schmierölkreislauf einer Brennkraftmaschine der im Oberbegriff des Anspruchs 1 angegebenen Gattung.

Bekannte Filter für Kraft- oder Schmierstoffe bestehen aus einer Filterpatrone sowie einem diese aufnehmenden Gehäuse, welches mit einem Deckel verschlossen wird. Da ein derartiges Filter einen Strömungswiderstand für das Schmieröl bildet, der in Abhängigkeit von der Viskosität des Schmieröls bzw. der Temperatur abhängig ist und mit zunehmender Betriebsstundenzahl ansteigt, wurde in der EP 0 463 289 B1 bereits ein Umgehungsventil vorgeschlagen, das in Abhängigkeit von dem auf das Ventilschließglied wirkenden Druck einen Bypass öffnet und somit einen Strömungsweg parallel zu dem Strömungsweg durch den Filtereinsatz freigibt.

Aus der DE 42 40 656 C2 ist ein Filter für Kraft- und/oder Schmierstoffe eines Verbrennungsmotors bekannt. Ein solches Filter besteht aus einer Grundplatte und einem Deckelteil sowie einem in einem Gehäuse angeordneten Filtereinsatz, der konzentrisch zu einer innerhalb des Filtereinsatzes befindlichen Stützhülse angeordnet ist. Bei diesem bekannten Filter sind innerhalb der Stützhülse zwei Ventile angeordnet, nämlich ein Umgehungsventil, das bei einem bestimmten Druck einen Bypass zum Filtereinsatz öffnet, sowie ein in Strömungsrichtung dem Umgehungsventil nachgeordnetes Rücklaufsperrventil, das bereits bei relativ niedrigem Druck in Durchlaßrichtung öffnet und das Schmieröl der Ausgangsöffnung des Filtergehäuses zuführt. Die bekannte Anordnung des Umgehungsventils und des Rücklaufsperrventils ist jedoch an die Bauart des Filters gebunden, so daß deren Einsatz wie bei anderen Filterausführungen oder weiteren Komponenten des Schmierölkreislaufs, die einen verschmutzungs- und/oder viskositäts- bzw. temperaturabhängigen Widerstand darstellen, nicht ohne weiteres einsetzbar sind.

Aus der US 4,322,290 ist eine Filtereinrichtung zum Filtrieren von Hydraulikflüssigkeit bekannt, bei der ein Rücklaufsperrventil und ein Umgehungsventil vorgesehen ist, die mittels Federn in Richtung auf eine Schließstellung belastet werden. Gleichzeitig wird mit dem Ventilsystem eine Anzeige des Verschmutzungsgrades ausgelöst bzw. aktiviert.

Der vorliegenden Erfindung liegt die Aufgabe zugrunde, eine Ventilanordnung der gattungsgemäßen Art zu schaffen, die einen kompakten Aufbau aufweist und universell einsetzbar ist.

Diese Aufgabe wird durch eine Ventilanordnung mit den Merkmalen des Anspruchs 1 gelöst.

Bei der erfindungsgemäßen Ventilanordnung sind die Funktionen des Rücklaufsperrventils sowie des Umgehungsventils in einer kompakt bauenden Einheit zusammengefaßt, wobei die Federn beider Ventilschließglieder mit entgegengesetzter Kraftrichtung an dem Ventilschließglied des Umgehungsventils abge stützt sind. Dabei ist die Federkraft der Feder des Rücklaufsperrventils wesentlich geringer als die Kraft der Feder des Umgehungsventils. Von besonderem Vorteil ist die universelle Verwendbarkeit der Ventilanordnung, da diese entweder in einem separaten Gehäuse oder in einer entsprechenden Bohrung eines Gehäuses einer Komponente des Schmierölkreislaufs eingesetzt werden kann.

Gemäß einer bevorzugten Ausgestaltung der Ventilanordnung ist das Ventilschließglied des Umgehungsventils als eine Ventilplatte ausgebildet, deren Umfangsrand mit einem Bohrungsabschnitt eines Gehäuses zusammenwirkt, wobei das Umgehungsventil geschlossen ist, wenn sich die Ventilplatte innerhalb dieses Bohrungsabschnitts befindet.

Zur weiteren baulichen Vereinfachung und Minimierung des notwendigen Bauvolumens ist es zweckmäßig, daß die Ventilplatte eine zentrische Öffnung aufweist und ein Schaft des Ventilschließgliedes des Rücklaufsperrventils durch die Öffnung geführt und die Ventilplatte auf dem Schaft nahezu spielfrei längsverschieblich ist. Um eine axiale Auslenkung bzw. ein Verkippen der sich relativ zueinander bewegenden Teile auszuschließen, ist an dem Schaft des Schließgliedes ein Zapfen angeformt, der in im Gehäuse angeordneten Mitteln zur axialen Führung gelagert ist. Diese Mittel zur axialen Führung können beispielsweise als ein sternförmiges Einsatzelement mit zentrischem Hülsenabschnitt ausgeführt sein. Ein solches Einsatzelement ist vorzugsweise an einem radialen Absatz im Gehäuse abgestützt und mittels eines Ringes in seiner Lage gesichert. Eine Ausführungsvariante bezüglich der Mittel zur axialen Führung besteht darin, daß das Gehäuse ein Gußteil aus einem Leichtmetall ist und die Mittel zur Führung mehrere radial auf den Zapfen gerichtete, angegossene Rippen umfassen. Bei einer solchen Ausführung ist die Gußform entsprechend auszugestalten. Der Vorteil einer solchen Lösung liegt jedoch darin, daß keine zusätzlichen Teile hergestellt und montiert werden müssen.

Die Federn sind zweckmäßigerweise als Schraubendruckfedern ausgebildet, wobei an dem Ventilschließglied des Umgehungsventils Mittel zur Lagesicherung dieser Federn vorgesehen sind. Diese Mittel können jeweils einen aus der Ebene der Ventilplatte hervorstehenden Ringbund umfassen, dessen Außendurchmesser geringfügig kleiner ist als der Innendurchmesser der Feder. Zur ordnungsgemäßen Funktion kann die Federkraft der Feder des Rücklaufsperrventils relativ gering bemessen sein, wobei der Öffnungsdruck beispielsweise etwa 0,2 bar beträgt. Die Federkraft der Feder des Umgehungsventils wird nach dem zu erwartenden Druckabfall in dem Bauteil, für das dessen Umgehungsventil wirksam werden soll, bemessen, wobei die ungünstigsten Bedingungen, beispielsweise geringe Viskosität bei niedrigen Temperaturen, die Bemessungsgrundlage bilden. In einem Schmierölkreislauf für eine Brennkraftmaschine ist die Federkraft so bemessen, daß das Umgehungsventil bei einem Differenzdruck von ca. 2 bar bis 2,5 bar öffnet.

In bevorzugter Weise wird die Ventilanordnung benachbart zu einer Eingangsöffnung des Ölfiltergehäuses angeordnet. Zweckmäßig ist auch, daß an das Ölfiltergehäuse ein Wärmetauscher, vorzugsweise ein Öl/Kühlmittel-Wärmetauscher angebaut ist, so daß das Schmieröl stromab des Rücklaufsperrventils dem Wärmetauscher zugeleitet wird.

Ausführungsbeispiele der Erfindung sind nachstehend anhand der Zeichnung näher erläutert. In der Zeichnung zeigt:
- Fig. 1: einen Längsschnitt durch eine Ventilanordnung mit zwei Ventilen,
- Fig. 2: eine Einzelheit aus Fig. 1 mit Mitteln zur Fixierung der Lage der Federn,
- Fig. 3: eine Draufsicht auf ein Einsatzelement als Einzelteil,
- Fig. 4: einen Ausschnitt eines Ölfilters mit angebautem Wärmetauscher (teilweise im Schnitt),
- Fig. 5: eine schematische Darstellung der Draufsicht auf einen Schmierölfilter mit angebautem Wärmetauscher.

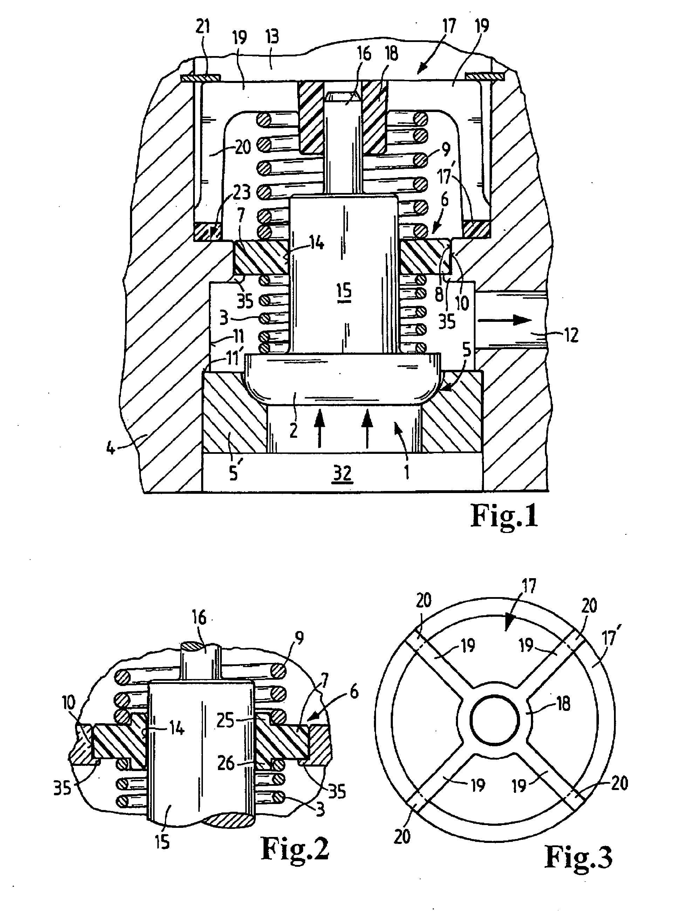

Fig. 1 zeigt ein vorzugsweise aus einem Gußteil bestehendes Gehäuse 4, in der eine Bohrung 11 angeordnet ist. In dieser Bohrung 11 befindet sich ein Rücklaufsperrventil 1, das ein Ventilschließglied 2 und einen Ventilsitz 5 umfaßt, der an einem in die Bohrung 11 eingesetzten Ring 5' ausgebildet ist. Dabei liegt der Ring 5' an einer radialen Schulter 11' der Bohrung an. Dabei liegt der Ring 5' an einer radialen Schulter 11' der Bohrung 11 an. Das Ventilschließglied 2 ist von einer Schließfeder 3 gegen den Ventilsitz 5 belastet. Das Rücklaufsperrventil 1 befindet sich benachbart zu einer Eingangsöffnung 32 für das Schmieröl. Es ist außerdem ein Umgehungsventil 6 vorgesehen, das als Ventilschließglied 7 eine Ventilplatte umfaßt, deren Umfangsrand 8 einem Innendurchmesser eines Bohrungsabschnitts 10 angepaßt ist, so daß die Ventilplatte 7 in dem Bohrungsabschnitt 10 längsverschieblich und aus diesem herausbewegbar ist. An dem zum Ring 5' gewandten Ende des Bohrungsabschnitts 10 befinden sich radial nach innen gerichtete Vorsprünge 35, an denen die Ventilplatte 7 zur Anlage kommt. Diese Vorsprünge 35 können einstückig mit dem Gehäuse 4 ausgeführt sein. Zwar ist zur reibungslosen Verschiebung der Ventilplatte zwischen dem Umfangsrand 8 und dem Innendurchmesser des Bohrungsabschnitts 10 ein notwendiges Spiel vorhanden, so daß auch eine gewisse Leckrate des Schmieröls auftreten kann, die jedoch keine nachteiligen Auswirkungen auf die Funktionsfähigkeit hat.

Wie aus Fig. 1 auch ersichtlich ist, stützt sich die Schließfeder 3 des Rücklaufsperrventils 1 an der Ventilplatte 7 ab, wobei die andere Stirnseite der Ventilplatte 7 von einer Schließfeder 9 für das Umgehungsventil 6 belastet ist, wobei die Schließfeder 9 sich andererseits an einem Einsatzelement 17 abstützt. Die Ventilplatte 7 weist eine zentrische Öffnung 14 auf, durch die ein an dem Ventilschließglied 2 angeformter Schaft 15 ragt, so daß die Ventilplatte 7 auf dem Schaft 15 gleitverschieblich angeordnet ist. An dem dem Ventilschließglied 2 abgewandten Ende des Schaftes 15 ist ein Zapfen 16 angeformt, der in einen Hülsenabschnitt 18 ragt, der Bestandteil des Einsatzelementes 17 ist und von radialen Armen 19 getragen wird, die ihrerseits mit Stützschenkeln 20 versehen sind, welche zu einem Ringelement 17' führen, das an einem radialen Absatz 23 der Bohrung 11 anliegt. Das Einsatzelement 17 mit seinen Bestandteilen 17', 18, 19 und 20 bildet somit einen stabilen Ventilkorb. Zur Lagesicherung des Einsatzelementes 17 ist ein Ring 21 vorgesehen.

In dem Bereich der Bohrung 11, der zwischen dem Rücklaufsperrventil 1 und dem Umgehungsventil 6 liegt, befindet sich eine Ausgangsöffnung 12, durch die das Schmieröl zur nächsten Komponente in dem Schmierölkreislauf geleitet wird, solange das Umgehungsventil 6 geschlossen und das Rücklaufsperrventil 1 aufgrund des von einer Schmierölpumpe erzeugten Druckes geöffnet ist. Die Federkraft der Schließfeder 3 ist so ausgelegt, daß das Rücklaufsperrventil 1 bei einem Druck von ca. 0,2 bar öffnet. Die Federkraft der Schließfeder 9 ist wesentlich größer und ist beispielsweise so bemessen, daß bei einem Differenzdruck an den beiden Stirnseiten der Ventilplatte 7 von etwa 2 bar bis 2,5 bar die Ventilplatte 7 gegen die Kraft der Schließfeder 9 verschoben wird, bis die Ventilplatte 7 aus dem Bereich des Bohrungsabschnitts 10 austritt und damit einen Bypass für das der Ausgangsöffnung 12 nachgeschaltete Bauteil des Schmierölkreislaufs öffnet. Durch den geöffneten Bypass gelangt das Schmieröl zur Ausgangsöffnung 13 des Umgehungsventils 6.

Die Fig. 2 zeigt als Einzelheit das Umgehungsventil 6 in einer Ausführungsvariante zu Fig. 1. Bei der in Fig. 2 gezeigten Ausführung weist die Ventilplatte 7 an der zentrischen Öffnung 14 einen Ringbund 25 sowie einen Ringbund 26 auf, die sich jeweils an einer der Stirnseiten der Ventilplatte 7 aus der Plattenebene erheben. Diese Ringbunde 25 und 26 sind bezüglich ihres Außendurchmessers etwa so bemessen, daß sie in den von den Spiralfedern 3 und 9 definierten Innenraum eingreifen und die Federn 3 und 9 in ihrer Lage sichern. Die übrigen Bezugszeichen der Fig. 2 stimmen für gleiche Teile mit denjenigen der Fig. 1 überein.

In Fig. 3 ist die Draufsicht auf das den Ventilkorb bildende Einsatzelement 17 als Einzelteil gezeigt. Daraus ist erkennbar, daß von dem Hülsenabschnitt 18 ausgehend sich sternförmig vier Arme 19 radial erstrecken, an deren Enden sich die Stützschenkel 20 befinden, die in das Ringelement 17' übergehen. Der Ventilkorb ist vorzugsweise einstückig als Spritzgußteil hergestellt.

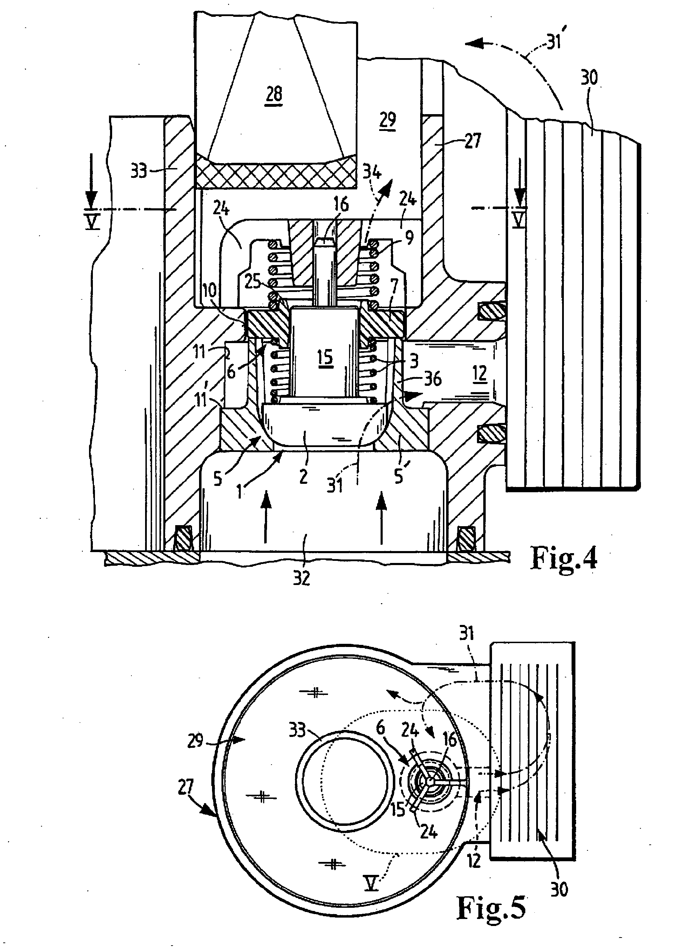

Die Fig. 4 zeigt einen Ausschnitt eines Ölfilters, wobei in einem Ölfiltergehäuse 27 ein Filtereinsatz 28 angeordnet ist.

Der Ölfiltereinsatz 28 befindet sich dabei auf einem zentrischen Rohrstutzen 33, durch den das gefilterte Schmieröl das Ölfilter verläßt. An dem Ölfiltergehäuse 27 ist ein Wärmetauscher 30 befestigt, der beispielsweise als Öl/Kühlmittel-Kühler ausgebildet ist. Von der in Fig. 4 gezeigten Unterseite ausgehend befindet sich eine Eingangsöffnung 32, durch die das zu kühlende bzw. zu reinigende Schmieröl in das Ölfiltergehäuse 27 eintritt. Der Eingangsöffnung benachbart ist das Rücklaufsperrventil 1 angeordnet, das bezüglich seines Aufbaus im wesentlichen demjenigen der Fig. 1 entspricht. Die Bezugszeichen für gleiche Teile stimmen daher mit denjenigen der Fig. 1 überein. An dem Ring 5' sind über den Umfang gleichmäßig verteilt in axialer Richtung der Bohrung 11 verlaufend mehrere Stege 36 vorgesehen, wobei drei Stege 36 als ausreichend angesehen werden. Das Rücklaufsperrventil 1 umfaßt den Ventilsitz 5 sowie das Ventilschließglied 2 und die Schließfeder 3. Unmittelbar hinter dem Rücklaufsperrventil 1 ist die Ausgangsöffnung 12 vorgesehen, die von der Bohrung 11 in dem Ölfiltergehäuse 27 ausgeht und an die der Wärmetauscher 30 angeschlossen ist. Der von einer in der Zeichnung nicht dargestellten Ölpumpe erzeugte Schmieröldruck bewirkt, daß das Rücklaufsperrventil 1 geöffnet wird, wodurch das Schmieröl gemäß Pfeil 31 zu dem Wärmetauscher 30 strömt, und wie mit Pfeil 31' angedeutet, aus dem anderen Ende des Wärmetauschers in das Ölfiltergehäuse 27 zurückgeführt wird und in dessen Innenraum 29 eintritt.

In der Bohrung 11 befindet sich außerdem das Umgehungsventil 6, das aus der Ventilplatte 7, der Schließfeder 9 und dem als Dichtsitz wirkenden Bohrungsabschnitt 10 besteht. Insofern stimmen für gleiche Teile die Bezugszeichen mit denjenigen der Fig. 1 überein. Die von der Schließfeder 9 belastete Ventilplatte 7 liegt in der Schließstellung des Ventils an den freien Enden der Stege 36 an und wird von diesen abgestützt. Das Umgehungsventil 6 befindet sich somit zwischen der von der Bohrung 11 abgehenden Ausgangsöffnung 12 und dem Innenraum 29 des Ölfiltergehäuses 27. Bei dem Ölfiltergehäuse 27 gemäß Fig. 4 handelt es sich beispielsweise um ein Bauteil aus Leichtmetallguß, wobei auf der zum Innenraum 29 gewandten Seite des Bohrungsabschnitts 10 drei angegossene Rippen 24 vorgesehen sind, die jeweils radial nach innen gerichtet sind und in einen axial zu dem Zapfen 16 verlaufenden Endabschnitt übergehen. Auf diese Weise erfüllen die angegossenen Rippen 24 die Führungsfunktion wie beispielsweise der Hülsenabschnitt 18 in Fig. 1. Durch die einstückige Ausführung der Rippen 24 mit dem Ölfiltergehäuse 27 wird die Anzahl der Bauteile minimiert.

Der Wärmetauscher 30 bildet einen Strömungswiderstand für das Schmieröl, wobei dieser Strömungswiderstand in Abhängigkeit von der Viskosität bzw. Temperatur oder der Verschmutzung des Schmieröls sehr großen Änderungen unterliegt. Um einen ausreichenden Schmierölstrom zum Filtereinsatz 28 hin zu gewährleisten, öffnet bei einem bestimmten Differenzdruck zwischen dem in der Ausgangsöffnung 12 anstehenden und im Innenraum 29 herrschenden Druck das Umgehungsventil 6, wobei das Schließglied 2 beispielsweise bei einem Druckgefälle von ca. 2,0 bar bis 2,5 bar gegen die Kraft der Schließfeder 9 auf dem Schaft 15 verschoben wird, so daß der Umfangsrand 8 der Ventilplatte 7 aus dem Bohrungsabschnitt 10 heraustritt und somit einen Schmierölstrom gemäß Pfeil 34 ermöglicht.

Die Fig. 5 zeigt in verkleinertem Maßstab eine schematische Ansicht des Gehäuses des Schmierölfilters 27 mit angebautem Wärmetauscher 30 von oben, wobei die Einzelheit V dem Schnitt entlang der Linie V-V in Fig. 4 entspricht. Aus Fig. 5 ist somit ersichtlich, daß in dem Ölfiltergehäuse 27 seitlich neben dem zentrischen Rohrstutzen 33 das Umgehungsventil 6 angeordnet ist, über dem sich die angegossenen Rippen 24 befinden, die sich sternförmig radial zu dem Zapfen 16 hin erstrecken und zu dessen Führung dienen. Mit dem Bezugszeichen 31 ist der Strömungsweg von der Ausgangsöffnung 12 durch den Wärmetauscher 30 und in den Innenraum 29 angedeutet.

## Patentansprüche

1. Ventilanordnung für einen Schmierölkreislauf einer Brennkraftmaschine, die ein Rüklaufsperrventil (1) und ein Umgehungsventil (6) umfaßt, wobei sowohl das Rücklaufsperrventil (1) als auch das Umgehungsventil (6) jeweils ein mittels einer Feder (3, 9) in Richtung auf eine Schließstellung belastetes Ventilschließglied (2, 7) aufweist, wobei die das Ventilschließglied (2) des Rücklaufsperrventils (1) belastende Feder (3) an dem Ventilschließglied (7) des Umgehungsventils (6) abgestützt ist und entgegen der Kraft der Feder (9) des Umgehungsventils (6) wirkt, wobei die Federkraft der Feder (3) des Rücklaufsperrventils (1) wesentlich geringer ist als die Feder (9) des Umgehungsventils (6),
**dadurch gekennzeichnet, daß** das Rücklaufsperrventil (1) stromauf des Umgehungsventils (6) angeordnet ist, wobei unmittelbar hinter dem Rücklaufsperrventil (1) eine Ausgangsöffnung (12) vorgesehen ist, die von einer Bohrung (11) in dem ölfiltergehäuse (27) ausgeht und an die ein Wärmetauscher (30) angeschlossen ist, und wobei das zu dem Wärmetauscher (30) geführte Schmieröl aus dem anderen Ende des Wärmetauschers in das Ölfiltergehäuse (27) zurückgeführt wird und in dessen Innenraum (29) eintritt.

2. Ventilanordnung nach Anspruch 1,
**dadurch gekennzeichnet, daß** das Ventilschließglied des Umgehungsventils (6) als eine Ventilplatte (7) ausgebildet ist, deren Umfangsrand (8) mit einem Bohrungsabschnitt (10) eines Gehäuses (4, 27) zusammenwirkt, wobei das Umgehungsventil (6) geschlossen ist, wenn sich die Ventilplatte (7) innerhalb dieses Bohrungsabschnitts (10) befindet.

3. Ventilanordnung nach Anspruch 2,
**dadurch gekennzeichnet, daß** Anschlagmittel (35, 36) vorgesehen sind, gegen die die Ventilplatte (7) durch die Kraft der Schließfeder (9) anlegbar ist.

4. Ventilanordnung nach Anspruch 3,
**dadurch gekennzeichnet, daß** als Anschlagmittel radiale Vorsprünge (35) vorgesehen sind, die sich am Ende des Bohrungsabschnitts (10) befinden.

5. Ventilanordnung nach Anspruch 3,
**dadurch gekennzeichnet, daß** als Anschlagmittel mehrere Stege (36) vorgesehen sind, die an einem Ring (5') angeformt sind und sich in axialer Richtung einer Bohrung (11), in der das Rücklaufsperrventil (1) angeordnet ist, erstrecken.

6. Ventilanordnung nach einem der Ansprüche 2 bis 5,
**dadurch gekennzeichnet, daß** die Ventilplatte (7) eine zentrische Öffnung (14) aufweist und ein Schaft (15) des Ventilschließgliedes (2) des Rücklaufsperrventils (1) durch die Öffnung (14) geführt und die Ventilplatte (7) auf dem Schaft (15) nahezu spielfrei längsverschieblich ist.

7. Ventilanordnung nach Anspruch 6,
**dadurch gekennzeichnet, daß** an dem Schaft (15) des Schließgliedes (2) ein Zapfen (16) angeformt ist, der in im Gehäuse (4, 27) angeordneten Mitteln zur axialen Führung gelagert ist.

8. Ventilanordnung nach Anspruch 7,
**dadurch gekennzeichnet, daß** das Mittel zur axialen Führung ein sternförmiges Einsatzelement (17) mit zentrischem Hülsenabschnitt (18) ist.

9. Ventilanordnung nach Anspruch 8,
**dadurch gekennzeichnet, daß** das Einsatzelement (17) radiale Arme (19) und Stützschenkel (20) umfaßt, an deren anderem Ende ein Ringelement (17') angeformt ist, so daß ein stabiler Ventilkorb gebildet ist.

10. Ventilanordnung nach Anspruch 9,
**dadurch gekennzeichnet, daß** das Einsatzelement (17) mittels des Ringelementes (17') an einem radialen Absatz (23) im Gehäuse (4) abgestützt und vorzugsweise mittels eines Ringes (21) in seiner Lage gesichert ist.

11. Ventilanordnung nach einem der Ansprüche 1 bis 10,
**dadurch gekennzeichnet, daß** die Federkraft der Feder (3) des Rücklaufsperrventils (1) so bemessen ist, daß der Öffnungsdruck etwa 0,2 bar beträgt.

12. Ventilanordnung nach einem der Ansprüche 1 bis 11,
**dadurch gekennzeichnet, daß** die Federkraft der Feder (9) des Umgehungsventils (6) so bemessen ist, daß das Umgehungsventil (6) bei einem Differenzdruck von ca. 2 bar bis 2,5 bar öffnet.

13. Ventilanordnung nach einem der Ansprüche 1 bis 12,
**dadurch gekennzeichnet, daß** die Ventilanordnung benachbart zu einer Eingangsöffnung (32) des Ölfiltergehäuses (27) angeordnet ist.

## Claims

1. Valve arrangement for a lubricating oil circuit of an internal combustion engine, said valve arrangement including a non return valve (1) and a by-pass valve (6), wherein both the non return valve (1) and the by-pass valve (6) each include a valve closing member (2, 7) that is biased in the direction of a closed position through the intermediary of a spring (3, 9), wherein the spring (3) that is biasing the valve closing member (2) of the non return valve (1) is supported on the valve closing member (7) of the by-pass valve (6) and operates in opposition to the force of the spring (9), wherein the spring force of the spring (3) of the non return valve (1) is substantially less than the spring (9) of the by-pass valve (6), **characterised in that** the non return valve (1) is disposed upstream of the by-pass valve (6), wherein directly behind the non return valve (1) there is provided an outlet opening (12), which extends from a bore (11) in the oil filter housing (27) and to which a heat exchanging means (30) is connected, and wherein the lubricating oil conveyed to the heat exchanging means (30) is returned out of the other end of the heat exchanging means into the oil filter housing (27) and enters the interior space (29) of said oil filter housing.

2. Valve arrangement according to claim 1, **characterised in that** the valve closing member of the by-pass valve (6) is in the form of a valve plate (7), the circumferential edge (8) of which interacts with a bore portion (10) of a housing (4, 27), wherein the by-pass valve is closed when the valve plate is situated internally of this bore portion (10).

3. Valve arrangement according to claim 2, **characterised in that** stop means (35, 36) are provided, against which the valve plate (7) is positionable by means of the force of the closing spring (9).

4. Valve arrangement according to claim 3, **characterised in that** radial projections (35) are provided as stop means, said radial projections being situated at the end of the bore portion (10).

5. Valve arrangement according to claim 3, **characterised in that** a plurality of webs (36) are provided as stop means, said webs being integrally formed on a ring (5') and extending in the axial direction of a bore (11), in which the non return valve (1) is disposed.

6. Valve arrangement according to one of claims 2 to 5, **characterised in that** the valve plate (7) includes a central opening (14) and a shaft (15) of the valve closing member (2) of the non return valve (1) is guided through the opening (14) and the valve plate (7) is mounted on the shaft (15) so as to be displaceable longitudinally in an almost play-free manner.

7. Valve arrangement according to claim 6, **characterised in that** a journal (16) is integrally formed on the shaft (15) of the closing member (2), said journal being mounted for axial guiding in means disposed in the housing (4, 27).

8. Valve arrangement according to claim 7, **characterised in that** the means for axial guiding is a star-shaped insert element (17) with a central sleeve portion (18).

9. Valve arrangement according to claim 8, **characterised in that** the insert element (17) includes radial arms (19) and support portions (20), at the other end of which a ring element (17') is integrally formed such that a robust valve cage is formed.

10. Valve arrangement according to claim 9, **characterised in that** the insert element (17) is supported through the intermediary of the ring element (17') on a radial projection (23) in the housing (4) and is preferably secured in its position through the intermediary of a ring (21).

11. Valve arrangement according to one of claims 1 to 10, **characterised in that** the spring force of the spring (3) of the non return valve (1) is dimensioned such that the opening pressure is approximately 0.2 bar.

12. Valve arrangement according to one of claims 1 to 11, **characterised in that** the spring force of the spring (9) of the by-pass valve (6) is dimensioned such that the by-pass valve (6) opens at a differential pressure of approximately 2 bar to 2.5 bar.

13. Valve arrangement according to one of claims 1 to 12, **characterised in that** the valve arrangement is disposed adjacent to an inlet opening (32) of the oil filter housing (27).

## Revendications

1. Dispositif de soupape destiné au circuit de graissage d'un moteur à combustion interne comprenant un clapet anti-retour (1) et une soupape de dérivation (6), dans lequel le clapet anti-retour (1) et la soupape de dérivation (6) présentent chacune un obturateur de soupape (2, 7) sollicité par un ressort (3, 9) dans la direction d'une position de fermeture, le ressort (3) de sollicitation de l'obturateur de soupape (2) du clapet anti-retour (1) s'appuyant sur l'obturateur de soupape (7) de la soupape de dérivation (6) en s'opposant à la force du ressort (9) de cette soupape de dérivation (6), la force du ressort (3) du clapet anti-retour (1) étant notablement inférieur à celle du ressort (9) de la soupape de dérivation (6), **caractérisé en ce que** le clapet anti-retour (1) est en amont de la soupape de dérivation (6), et immédiatement derrière le clapet anti-retour (1) une ouverture de sortie (12), part d'une cavité (11) réalisée dans le carter du filtre à huile (27) et est reliée à un échangeur de chaleur (30), et l'huile de graissage apportée à l'échangeur de chaleur (30) est renvoyée au carter du filtre à huile (27) et introduite à l'intérieur (29) de celui-ci depuis l'autre extrémité de l'échangeur de chaleur.

2. Dispositif de soupape de dérivation (6) selon la revendication 1, **caractérisé en ce que** l'obturateur de soupape de dérivation (6) à la forme d'une plaque porte-soupape (7) dont le bord périphérique (8) coopère avec un segment de perçage (10) d'un carter (4, 27), la soupape de dérivation (6) est fermée lorsque la plaque porte-soupape (7) se trouve dans ce segment de perçage (10).

3. Dispositif de soupape de dérivation selon la revendication 2, **caractérisé par** des moyens de levage (35, 36) contre lesquels la plaque porte-soupape (7) peut s'appliquer sous l'action de la force du ressort de fermeture (9).

4. Dispositif de soupape de dérivation selon la revendication 3, **caractérisé en ce que** les moyens de levage sont des saillies radiales (35) à l'extrémité du segment de perçage (10).

5. Dispositif de soupape de dérivation selon la revendication 3, **caractérisé en ce que** les moyens de levage sont plusieurs barrettes (36) formées au niveau d'une bague (5') et qui se prolongent dans la direction axiale d'une cavité (11) logeant le clapet anti-retour (1).

6. Dispositif de soupape de dérivation selon l'une des revendications 2 à 5, **caractérisé en ce que** la plaque porte-soupape (7) présente une ouverture centrée (14), une tige (15) de l'obturateur de soupape (2) du clapet anti-retour (1) est introduite dans l'ouverture (14), et la plaque porte-soupape (7) est mobile longitudinalement sur la tige (15) pratiquement sans jeu.

7. Dispositif de soupape de dérivation selon la revendication 6, **caractérisé en ce qu'**un pivot (16) formé sur la tige (15) de l'obturateur de soupape (2), est logé dans des moyens de guidage axial présents dans le carter (4, 27).

8. Dispositif de soupape de dérivation selon la revendication 7, **caractérisé en ce que** le moyen de guidage axial consiste en un insert (17) en forme d'étoile ayant un segment de douille centré (18).

9. Dispositif à vannes selon la revendication 8, **caractérisé en ce que** l'nsertion (17) comprend des bras radiaux (19) et des branches d'appui (20) dont l'autre extrémité comporte un élément annulaire (17') pour former une cage de clapet anti-retour stable.

10. Dispositif à vannes selon la revendication 9, **caractérisé en ce que** l'insertion (17) s'appuie, par l'élément annulaire (17'), sur un gradin (23) radial du carter (4) et est maintenu en place de préférence au moyen d'une bague (21).

11. Dispositif à vannes selon l'une des revendications 1 à 10, **caractérisé en ce que** la force du ressort (3) du clapet anti-retour (1) est dimensionnée pour une pression d'ouverture d'environ 0,2 bar.

12. Dispositif selon l'une des revendications 1 à 11, **caractérisé en ce que** la force du ressort (9) de la soupape de dérivation (6) est dimensionnée pour ouvrir la soupape de dérivation (6) sous une pression diffèrentielle d'environ 2 à 2,5 bar.

13. Dispositif selon l'une des revendications 1 à 12, **caractérisé en ce que** le dispositif est moitié à proximité d'une ouverture d'entrée (32) du carter du filtre à huile (27).
